# EUROPEAN PATENT APPLICATION

(11) **EP 1 965 378 A1**
(43) Date of publication of application: **03.09.2008**
(21) Application number: 07103230.4
(22) Date of filing: 28.02.2007
(51) Int. Cl.: G11B 7/09

(54) **Pickup for accessing moving storage media and drive having the pickup**

(71) Applicant: Deutsche Thomson OHG, 30625 Hannover (DE)
(72) Inventor: Bammert, Michael, 78739 Hardt (DE); Suzuki, Tsuneo, 78087 Mönchweiler (DE); Dupper, Rolf, 78050 Villingen-Schwenningen (DE)
(74) Representative: Thies, Stephan

(57) **Abstract**

A pickup (P) for accessing moving storage media (D), which carries substantially parallel information tracks (T), has a carrier (C), an actuator (A) and at least four suspension wires (4, 15, 16), which join the carrier (C) and the actuator (A). The actuator (A) has a body (B) with a lens (3) and is movable in a tracking direction (X), in a focus direction (Y) and in an information direction (Z) orthogonal to the tracking direction (X) and the focus direction (Y). The suspension wires (4, 15, 16) are curved, extend at opposite sides of the body (B) in information direction (Z), and are connected at the body (B) at opposite sides of the body (B) in the tracking direction (X). The body (B) has a rectangular cross section in a plane spanned by the tracking direction (X) and the information (Z), where its longer sides (5) extend parallel to the tracking direction (X). The suspension wires (4) are connected at the four corners (8) of the body (B).

## Description

### BACKGROUND OF THE INVENTION

### FIELD OF THE INVENTION

The present invention is related to a pickup for accessing moving storage media according to the preamble of claim 1. Pickups are used as part of a recording and/or reproducing apparatus, e.g. of a DVD player, a DVD recorder or of similar apparatuses.

### DESCRIPTION OF THE PRIOR ART

Pickups for accessing moving storage media, carrying substantially parallel information tracks, record and/or reproduce information with respect to the moving storage media, namely a turning disk, while moving in the radial direction of the disk. In the pickup, typically one or more light beams are generated and focused onto a target or scanning spot on a layer within the disk. Readout light beams coming from the disk are projected onto a photo detector, where they are converted into electrical signals for further evaluation.

A well-known pickup comprises a carrier, an actuator with a body and a lens, and suspension wires joining the carrier and the actuator. The suspension wires are both movably supporting the actuator, as well as applying currents to coils, which are arranged on the body of the actuator. The coils and a magnet configuration, all together referred to as a magnetic driving portion, initiate the movements of the actuator. The actuator is movable relatively to the carrier in a focus direction Y orthogonal to the disk, and in a tracking direction parallel to the surface of the disk, orthogonal to the information tracks. By moving the actuator with the lens, the beam spot can be accurately located on the disk.

A pickup for accessing moving storage media, referred to as an optical pickup, is described in US 5745447 A. The pickup has a carrier with a base, an actuator with a body carrying a lens and a plurality of suspension members, all together referred to as a three-axis moving actuator. Each suspension member is formed of elastic material so as to serve as an elastically biasing member which is capable of stretching. The body, referred to as a lens holder, is movable not only in the focus direction and in the tracking direction, but also in an information direction orthogonal to the focus direction and the tracking direction. I.e. the body is movable in a tangential direction of a disk track, in order to control an error in the tangential direction of the disk track. Such an error correction is needed for high-density disks such as digital versatile disks (DVD's). The body of this pickup is shaped as an octangular pillar, a square pillar or a cylinder. As a result, the body has a shape with the same symmetry in both the tracking direction and the information direction. Such a body has identical resonance frequencies in both directions, which may cause difficulties while adjusting its movements.

### SUMMARY OF THE INVENTION

It is therefore desirable to improve a pickup according to the preamble of claim 1, in particular to improve the adjustment of three-axis movements.

According to the invention this is achieved by the features of claim 1. Possible advantageous developments of the invention are specified in the dependent claims.

A pickup for accessing moving storage media, which carries substantially parallel information tracks, has a carrier, an actuator and at least four suspension wires, which join the carrier and the actuator. The actuator has a body with a lens and is movable in a tracking direction, in a focus direction and in an information direction orthogonal to the tracking direction and the focus direction. The suspension wires are curved, e.g. they are bent and/or crumped, and/or they are zigzag-shaped or they are shaped as spiral springs. It is essential, that the suspension wires are prolongable in the information direction and that they are connected to the body in a way that they are capable of being compressed and stretched in the information direction.

The suspension wires extend in information direction, i.e. the suspension wires extend parallel to the information direction or in an acute angle to the information direction, at opposite sides of the body. The suspension wires are oriented parallel to each other. As an alternative, the suspension wires are oriented in different directions.

The suspension wires are connected to the body at opposite sides of the body in the tracking direction. The body has a rectangular cross section in a plane spanned by the tracking direction and the information direction, where its longer sides extend parallel to the tracking direction. The suspension wires are connected at the four corners of the body.

A rectangular shape of the body assures different resonance frequencies in the tracking direction and in the information direction.

A pickup according to the invention is able to control errors in the information direction, i.e. in the tangential direction of the disk tracks, and can be used for high-density disks such as digital versatile disks (DVD's). One method for controlling such errors is a so-called EF-adjustment. The EF-adjustment uses three beams, where the outer beams, i.e. the E-beam and the F-beam, are used to determine and to adjust the position of the three beams onto a scanning spot on the disk, in the information direction.

Preferably, the number of the suspension wires is an integer multiple N of four, where N suspension wires are connected at each corner of the body.

The suspension wires extend, substantially, parallel and/or in an acute angle to the information direction.

As an alternative, all suspension wires extend substantially parallel to the information direction. As a result, the pickup can be constructed small in the tracking direction.

As another alternative, all suspension wires extend substantially in an acute angle to the information direction. As a result, the pickup can be constructed small in the information direction.

Preferably, the acute angle is between 10° and 30°. Further, the suspension wires preferably extend from the body to holder elements of the carrier in an acute angle outwards.

Preferably, the suspension wires are shaped as spiral springs. As one alternative, all suspension wires are shaped as spiral springs.

As another alternative, the pickup comprises pairs of suspension wires, of which a first suspension wire is shaped as a spiral spring and a second suspension wire is shaped as a slightly bent wire extending through the inside of the spiral of the first suspension wire. The pairs of suspension wires provide the double number of electric connections without needing much more space than a single suspension wire. As a result, the pickup can be built with a decreased height in the focus direction.

Preferably, the suspension wires and/or the pairs of suspension wires are arranged side by side in the focus direction, at the corners.

Preferably, a moving storage media drive has a pickup mentioned above.

The carrier, being an ensemble of rigidly connected elements does not preclude that typically the pickup as a whole, including carrier, suspension wires and actuator, is movable and is being moved in a direction orthogonal to information tracks on the storage medium, so that all storage locations on the medium can be accessed. In this way, accessing shall encompass reading access for reading information from the storage medium, or writing access for writing or recording information into the storage medium, or combinations of reading and writing access.

One possible form of moving storage media is disks carrying concentric circular or spiral information tracks, with the access being of a reflective type where an access light beam is being generated and focused onto the information track and a reflected light beam, coming back from and being modulated by the information track, is being focused onto a photo detector arrangement and being evaluated. However, it is within the scope of this invention to be used on other forms of optical recording medium having information tracks in layers, like those in card or tape form; and regardless whether the access principle is of a reflective or of a transductive type.

### BRIEF DESCRIPTION OF THE DRAWINGS

The invention will be explained in more detail using two embodiments, illustrated in figures.

In the Figures:
- Figure 1: shows a simplified perspective view of a pickup of a first embodiment of the invention,
- Figure 2: shows another simplified perspective view of the pickup of figure 1,
- Figure 3: shows a further simplified perspective view of the pickup of figure 1,
- Figure 4: shows a simplified top view of the pickup of figure 1,
- Figure 5: shows a simplified perspective view of a pickup of a second embodiment of the invention,
- Figure 6: shows another simplified perspective view of the pickup of figure 5, and
- Figure 7: shows a simplified top view of the pickup of figure 5.

### DETAILED DESCRIPTION OF THE INVENTION

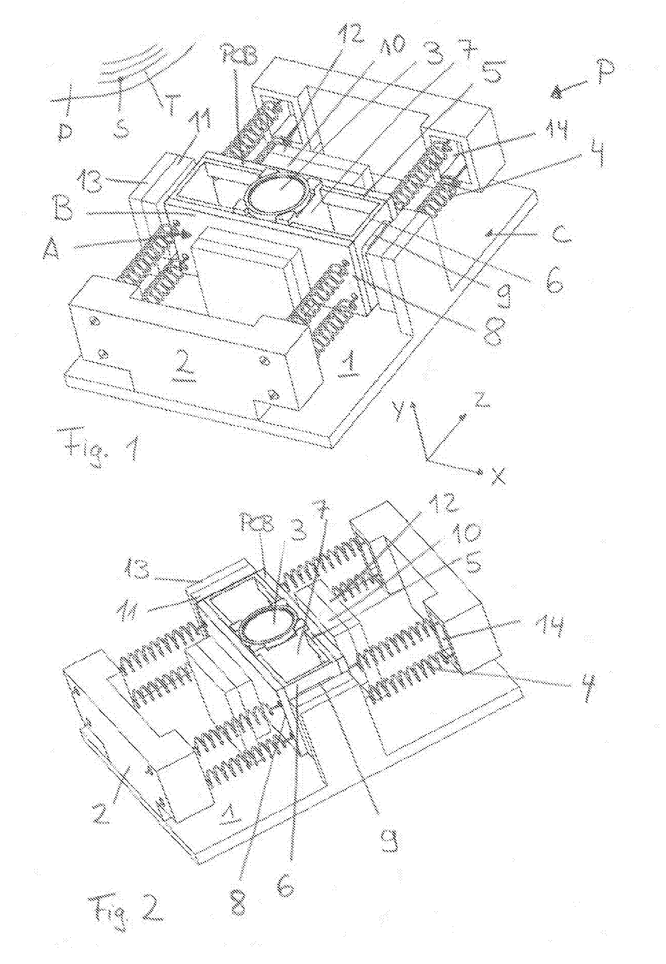

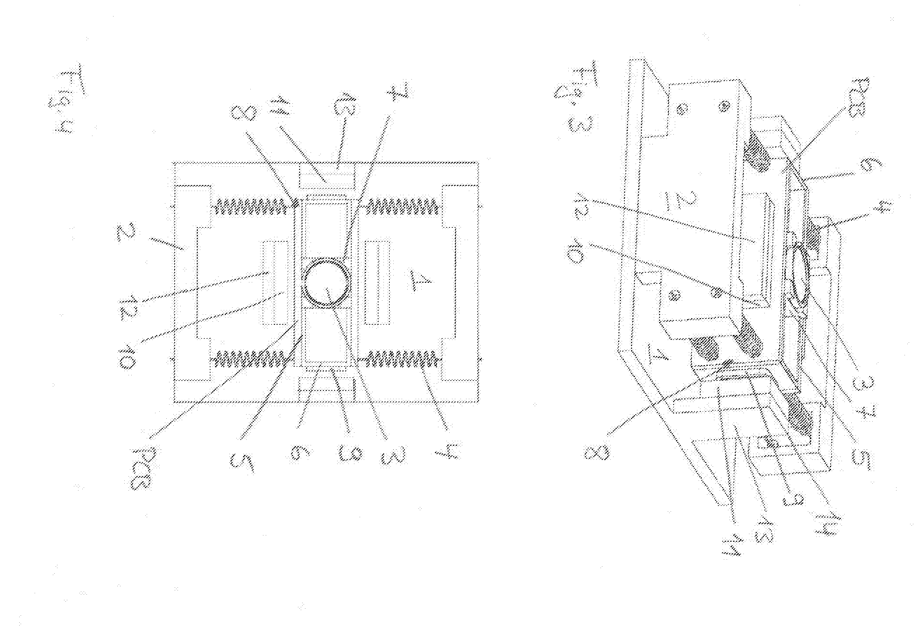

With reference to **Figures 1 to 4**, according to a first embodiment of the invention, a pickup P for accessing moving storage media, namely a disk D, has a carrier C with a base 1 and two holder elements 2, an actuator A with a body B and a lens 3, and suspension wires 4 joining the carrier C and the actuator A.

By means of the suspension with the suspension wires 4, the actuator A with the lens 3 is able to perform focus motion in a focus direction Y orthogonal to the disk D carrying substantially circular information tracks T, shown in **Figure 1**, with strongly disproportionate distance. Additionally, the actuator A is able to perform tracking motion in a tracking direction X parallel to the surface of the disk D and orthogonal to the information tracks T. Additionally, the actuator A is able to perform so-called radial tilt motion by rotating around an information direction Z, which is parallel to the tangent to the information tracks T at a scanning spot S. It is essential, that the actuator A is also movable in the information direction Z.

The suspension wires 4 extend at opposite sides of the body B in the information direction Z and are connected to the body B at opposite sides of the body B in the tracking direction X.

The body B has a rectangular cross section in a plane spanned by the tracking direction X and the information direction Z, where the body B comprises a frame, constituted by two parallel longer sides 5 and two parallel shorter sides 6, and a corpus 7 with the lens 3 in the inside of the frame. The lens 3 is arranged in an upper region of the corpus 7 in the focus direction Y, at a height above the upper suspension wires 4.

The longer sides 5 extend parallel to the tracking direction X. The suspension wires 4 are connected with their one ends to the body B at the four corners 8, i.e. in the region of the four corners 8. In this embodiment, the suspension wires 4 are connected at the longer sides 5 near the corners 8.

In particular, the suspension wires 4 are shaped as spiral springs and extend substantially parallel to the information direction Z. The number of the suspension wires 4 is eight, i.e. the integer multiple N of four, for the suspension wires 4, is chosen as two. As a result, two suspension wires 4 are connected at each of the four corners 8. The two suspension wires 4 connected at each corner 8 are arranged on top of each other in the focus direction Y.

The longer sides 5 of the body B comprise first printed circuit boards PCB with coils. The suspension wires 4 are connected to the longer sides 5 by soldering points, which are not depicted in the figures. Each of the shorter sides 6 of the body B carries a second printed circuit board 9 with a coil for the EF-adjustment.

The suspension wires 4 connect the actuator A, in particular the body B, with the carrier C in a way that the actuator A is suspended over the base 1 of the carrier C.

The pickup P further comprises a magnet configuration with two first magnets 10 and two second magnets 11. The first magnets 10 are situated above the base 1, in front of the two opposite longer sides 5 of the body B in the information direction Z, and extend in a plane spanned by the tracking direction X and the focus direction Y. The second magnets 11 are situated above the base 1, in front of the two opposite shorter sides 6 of the body B in the tracking direction X, and extend in a plane spanned by the information direction Z and the focus direction Y. The magnets 10, 11 are carried by carrier elements 12, 13, which extend orthogonal from the base 1, parallel to the corresponding magnets 10, 11, and which have shapes similar like to the shapes of the corresponding magnets 10, 11.

The coils of the first printed circuit boards PCB of the longer sides 5 cooperate with the first magnets 10 of the magnet configuration, and the coils of the second printed circuit boards 9 cooperate with the second magnets 11. The coils are formed as printed coils or as fine pattern coils.

The base 1 extends in a plane orthogonal to the focus direction Y and parallel to the disk D, i.e. in the plane spanned by the tracking direction X and the information direction Z. The two holder elements 2 are arranged at opposite sides of the body B in the information direction Z and are connected to base 1.

Each holder element 2 comprises a third printed circuit board with soldering points for the other ends of the suspension wires 4. The third printed circuit boards, which are not depicted in the figures, are located at those sides of the holder elements 2 which are opposite to the actuator A. Each holder element 2 comprises two chambers 14 at opposite sides in the tracking direction X, through which the suspension wires 4 are guided. Each chamber 14 is constituted by a damping block with a damping material inside, which damps the suspension wires 4 extending through the chamber 14.

A pickup P according to this invention is usable in the so-called slide or sled design of optical media drives, where it is shiftably fitted to a frame structure of the drive, with appropriate linear driving means for realising the shift, such as linear motors or a motor driven threaded rod. Alternatively, the pickup P according to this invention is also usable in the so-called swivel arm design, where it is pivotably mounted on the end of an arm having a pivoting axis parallel to the focus direction. In that way, the pickup P is movable across the tracks T on the surface of the disk D along an arc which has its main extension in the tracking direction X.

The second embodiment of the invention corresponds to the first embodiment except for the following features:

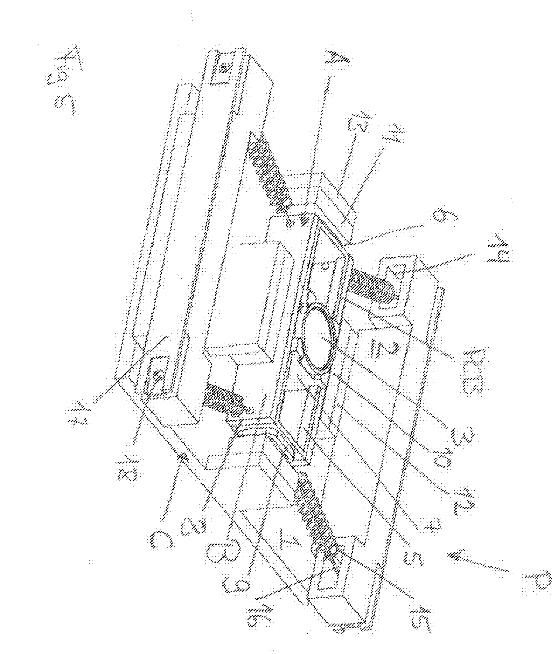

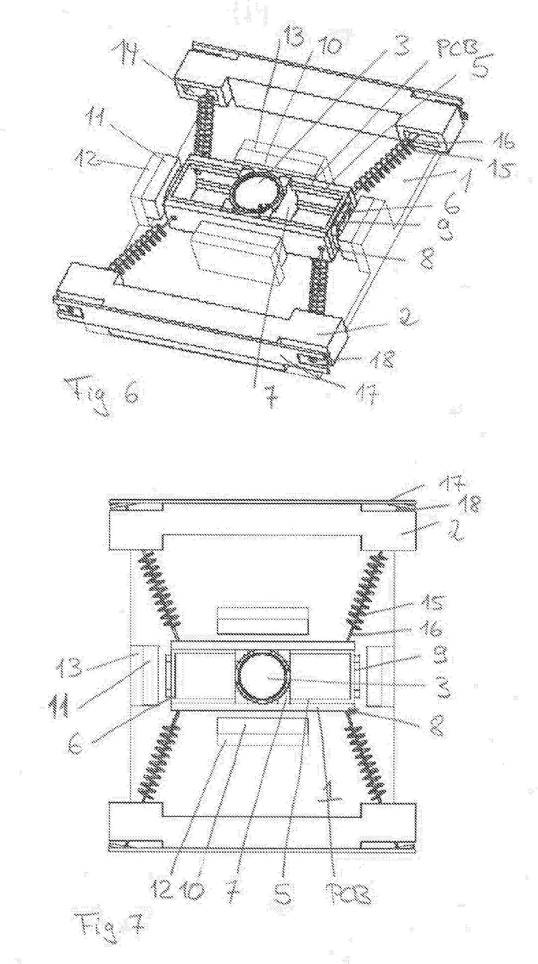

With reference to **Figures 5 to 7**, the pickup comprises four pairs of first suspension wires 15 and second suspension wires 16, i.e. the integer multiple N of four is two, as in the first embodiment. The first suspension wires 15 are shaped as spiral springs and the second suspension wires 16 are shaped as slightly bent wires, where each extends through the inside of the corresponding first suspension wire 15.

The first and second suspension wires 15, 16 of a pair are connected with their one ends at the four corners 8. The ends of the first and second suspension wires 15, 16 are arranged near one another and connected, near the corners 8, to the longer sides 5 of the body B by soldering points, which are not depicted in the figures.

The first and second suspension wires 15, 16 of a pair extend jointly and, substantially, in an acute angle to the information direction, preferably in an angle between 10° and 30°. In this embodiment the angel is 20°. The suspension wires 15, 16 extend from the body B outwards to the holder elements 2.

As in the first embodiment, each holder element 2 comprises a third printed circuit board 17, which is however depicted in the figures. The third printed circuit boards 17 are provided with soldering points 18 for the other ends of the suspension wires 15, 16.

The overall height of the pickup P, in particular of the holder elements 2, the first and second magnets 10, 11, their first and second carrier elements 12, 13, and the body B, is reduced compared to the height of the pickup P of the first embodiment.

## Claims

1. A pickup (P) for accessing moving storage media (D) carrying substantially parallel information tracks (T), the pickup (P) having a carrier (C), an actuator (A) and at least four suspension wires (4, 15, 16) joining the carrier (C) and the actuator (A),
the actuator (A) having a body (B) with a lens (3) movable in a tracking direction (X), in a focus direction (Y) and in an information direction (Z) orthogonal to the tracking direction (X) and the focus direction (Y),
the suspension wires (4, 15, 16) being curved, extending at opposite sides of the body (B) in the information direction (Z), and being connected at the body (B) at opposite sides of the body (B) in the tracking direction (X), the pickup (P) **characterized in that**
the body (B) has a rectangular cross section in a plane spanned by the tracking direction (X) and the information direction (Z), where its longer sides (5) extend parallel to the tracking direction (X) and **in that** the suspension wires (4, 15, 16) are connected at the four corners (8) of the body (B).

2. The pickup (P) according to claim 1, where the number of the suspension wires (4, 15, 16) is an integer multiple N of four, where N suspension wires (4, 15, 16) are connected at each corner (8).

3. The pickup (P) according to claim 1 or 2, where at least some of the suspension wires (4) extend substantially parallel to the information direction (Z).

4. The pickup (P) according to one of claims 1 to 3, where at least some of the suspension wires (15, 16) extend substantially in an acute angle to the information direction (Z) .

5. The pickup (P) according to one of claims 1 to 4, where at least some of the suspension wires (4, 15) are shaped as spiral springs.

6. The pickup (P) according to one of claims 1 to 5, where the pickup comprises pairs of suspension wires (15, 16), of which a first suspension wire (15) is shaped as a screw spring and a second suspension wire (16) is shaped as a slightly bent wire extending through the inside of the screw of the first suspension wire (15).

7. The pickup (P) according to one of claims 1 to 6, where the suspension wires (4) and/or the pairs of suspension wires (15, 16) are arranged side by side in the focus direction (Y), at the corners (8).

8. A moving storage media drive **characterised in that** it has a pickup (P) according to one of claims 1 to 7.
